# EUROPÄISCHE PATENTSCHRIFT

(11) **EP 0 984 873 B1**
(45) Veröffentlichungstag und Bekanntmachung des Hinweises auf die Patenterteilung: **28.11.2001**
(21) Anmeldenummer: 98925573.2
(22) Anmeldetag: 07.05.1998
(51) Int. Cl.: B60P 7/08

(54) **BELASTUNGSANZEIGER AN ZUGMITTELN**
LOAD INDICATOR ON TRACTION ELEMENTS
INDICATEUR DE CHARGE SITUE SUR DES ELEMENTS DE TRACTION

(30) Priorität: 03.06.1997 DE 19724227; 19.12.1997 EP 97250377; 28.01.1998 EP 98101453
(43) Veröffentlichungstag der Anmeldung: 15.03.2000
(73) Patentinhaber: Spanset Inter AG, 8618 Oetwil am See (CH)
(72) Erfinder: KÄMPER, Hans-Werner, D-52457 Aldenhoven (DE)
(74) Vertreter: Tergau & Pohl Patentanwälte
(86) Internationale Anmeldenummer: EP9802747
(87) Internationale Veröffentlichungsnummer: WO9855341

(56) Entgegenhaltungen:
- DE-A- 3 248 789
- DE-U- 9 406 818
- FR-A- 2 253 209
- GB-A- 2 223 102
- GB-A- 2 255 109

## Beschreibung

Die Erfindung betrifft Belastungsanzeiger zur Anzeige von Zugspannungen an Zugmitteln, z.B. an Zurrbändern oder an Zurrseilen. Diese Zugmittel sind nachstehend der Einfachheit halber auch kurz als "Bänder" bzw. "Band" bezeichnet. Sie sind mit einer Schlaufe oder Öse zum Angriff eines eine Gegenhaitekraft zum Zugmittel einleitenden Adaptionsteiles versehen. Ein solches Adaptionsteil kann z.B. der Schraubbolzen eines Schäkels oder der Anschlagbolzen einer Zurratsche sein.

Ein derartiger Belastungsanzeiger dient dazu, bei Zurrungen oder Verspannungen dem Anwender optisch anzuzeigen, welche Belastung etwa vorliegt, insbesondere ob eine Gefahrensituation zu besorgen ist. Beim Transport auch von gezurrter Ladung z.B. auf LKW's verschiebt sich bisweilen die Ladung durch äußere Krafteinwirkung. Diese Verschiebung bewirkt dann oftmals eine starke Verspannung der Zurrung, die beim Abnehmen der Ladung die Bedienungsperson gefährden kann, Bekannt sind üblicherweise mit Spannratschen montierte Belastungsanzeiger, die jedoch vorzugsweise zur Kenntlichmachung der Vorspannkraft beim Zurren dienen, jedoch auch eine durch Ladungsverschiebung aufgetretene Verspannung der Zurrung warnend anzeigen können. Diese Belastungsanzeiger sind jedoch wegen ihres komplizierteren Aufbaus vergleichsweise teuer.

Durch GB 2 255 109 A ist ein Belastungsanzeiger mit den Merkmalen des Oberbegriffs des Anspruches 1 bekannt, welcher speziell für Selle bestimmt ist und bei welchem der Anzeigekörper durch eine zu diesem Zwecke weiterentwickelte Seilkausche gebildet ist. Die in sich ringsum geschlossene Seilkausche ist bei einer Einfachversion des dortigen Belastungsanzeigers in ihrem der Spitze der Tropfenform der Schlaufe zugewandten, nicht mehr von den Innenflanken der Schlaufe beaufschlagten Bereich ihrer Ringform mit einem Radialschlitz versehen, die den an den Innenflanken der Schlaufe anliegenden Schenkeln der Kausche einen Bewegungsspielraum in Richtung aufeinander gibt. Dieser geringfügige Bewegungsspielraum gibt den Schenkeln der durch ihre Querschnittsform von Hause aus in sich relativ starren Kausche in einem hohen Belastungsbereich eine elastische Beweglichkeit ihrer Schenkel in Richtung aufeinander. Das Maß dieser Bewegung ist durch eine mechanische Anzeige erkennbar und läßt demzufolge Rückschlüsse auf den Belastungszustand zu. Dieser Belastungsanzeiger eignet sich nur zur Verdeutlichung von Hochbelastungszuständen. Er ist relativ ungenau und dazu noch konstruktiv vergleichsweise aufwendig.

Ein aus GB 2 223 102 A bekannter, funktionsmäßig allerdings nur ähnlich wirksamer Belastungsanzeiger enthält einen zwischen der Schlaufe des Zugmittels und dem Schraubbolzen eines in die Schlaufe eingreifenden Schäkels einen speziell gestalteten, den Zugbolzen ringsherum über 360° umgebenden, unter Last verformbaren Formkörper. Der unter Last vorliegende Verformungsgrad wird dort nach Art einer Dehnungsmesseinrichtung als Indikator für die anliegende Last verwendet.

Der Erfindung liegt demgegenüber die Aufgabe zugrunde, einen Belastungsanzeiger der im Oberbegriff des Anspruches 1 genannten Art so auszubilden, daß er bereits geringe Belastungskräfte anzeigt und damit über den gesamten Belastungsbereich des Zugmittels wirksam ist. Außerdem soll er kostengünstig herstellbar und zuverlässig geeignet sein, gefährliche Spannkraftsituationen anzuzeigen. Diese Aufgabe wird durch Anspruch 1 gelöst. Diese Lösung basiert auf der Deformation, die allein die unter Nulllast leicht aufgeweitete Schlaufe oder Öse unter Last durch zunehmende Annäherung an die Querschnittsform eines Tropfens und durch dessen Dehnung erfährt. Derartige Bandschlaufen bzw. Bandösen weisen nämlich unter Last und bei einem Angriff der eingeleiteten Gegenkraft durch ein in die Bandöse eingreifendes Adaptionsteil etwa die Umrißform eines Tropfens mit in Bandrichtung weisender Tropfenspitze auf. Bandösen oder -schlaufen werden nämlich in der Regel dadurch gebildet, daß das hier ganz allgemein für den Begriff "Zugmittel" stehende Band an einem Ende um 180° umgelegt und in dieser Umlegeposition das Bandende unmittelbar auf dem Band aufliegend fixiert oder bei einem Seil als Zugmittel mit diesem verspleißt wird. Mit zunehmender Zugspannung bildet sich immer mehr die Tropfenform aus, weil sich die Innenflanken der Bandschlaufe bzw. -öse einander annähern. Das Maß dieser Annäherung wird durch den Belastungsanzeiger optisch besser erkennbar gemacht, als das durch bloße Inaugenscheinnahme der Bandschlaufe bzw. -öse möglich ist.

Anspruch 2 kennzeichnet eine besonders einfache Ausführungsform des Belastungsanzeigers. Anspruch 3 beinhaltet eine andere Ausführungsform, bei der die Enden des Anzeigekörpers außer direktem Kontakt mit dem Band sind. Anspruch 4 beinhaltet eine Ausführungsform, die die Erkennbarkeit des Zwischenabstandes zwischen den Schenkeln .verbessert. Anspruch 5 umfaßt die Vorteile der Lösungen der Ansprüche 3 und 4 in einer gemeinsamen Ausführungsform.

Die Ansprüche 6 bis 8 beinhalten eine Variante, die auch Zwischenbelastungen zwischen völliger Entlastung und einer Gefahr-Belastung ablesbar macht. Dadurch sind unterschiedliche Belastungsstufen noch deutlicher erkennbar.

Die Erfindung wird anhand von Ausführungsbeispielen näher erläutert. Es zeigen:
- Fig. 1-5: unterschiedliche Ausführungsformen von Belastungsanzeigern bzw. Anzeigekörper in jeweiliger Einlagestellung an einer Bandschlaufe bzw. -öse und zwar jeweils in der linken, mit a überschriebenen Spalte in belastungsfreiem Ruhezustand und in der rechten, mit b überschriebenen Spalte in belastetem Gefahrenzustand,
- Fig. 6: einen in Bandrichtung verlaufenden Längsschnitt durch eine Bandverbindung analog Fig. 3,
- Fig. 7: eine Draufsicht in Pfeilrichtung VII auf das Ensemble von Fig. 6,
- Fig. 8: eine modifizierte Ausführungsform des Belastungsanzeigers in belastungsfreiem Ruhestand,
- Fig. 9: die Ausführungsform nach Fig. 8 in belastetem Gefahrenzustand,
- Fig. 10: einen Anzeigekörper,
- Fig. 11: einen anderen Anzeigekörper,
- Fig. 12: eine perspektivische Darstellung des Anzeigekörpers nach Fig. 11,
- Fig. 13: eine perspektivische Darstellung des Anzeigekörpers gemäß Fig. 10 mit einliegendem Adaptionsteil,
- Fig. 14: einen modifizierten Anzeigekörper ähnlich denen nach Fig. 10-13.
- Fig. 15: eine Seitenansicht des Anzeigekörpers nach Fig. 14 bei unterschiedlichen Belastungen, nämlich
a = entlasteter Ruhezustand,
b = 1/3 Zwischenbelastung
c = 2/3 Zwischenbelastung
d = Gefahr-Belastung,

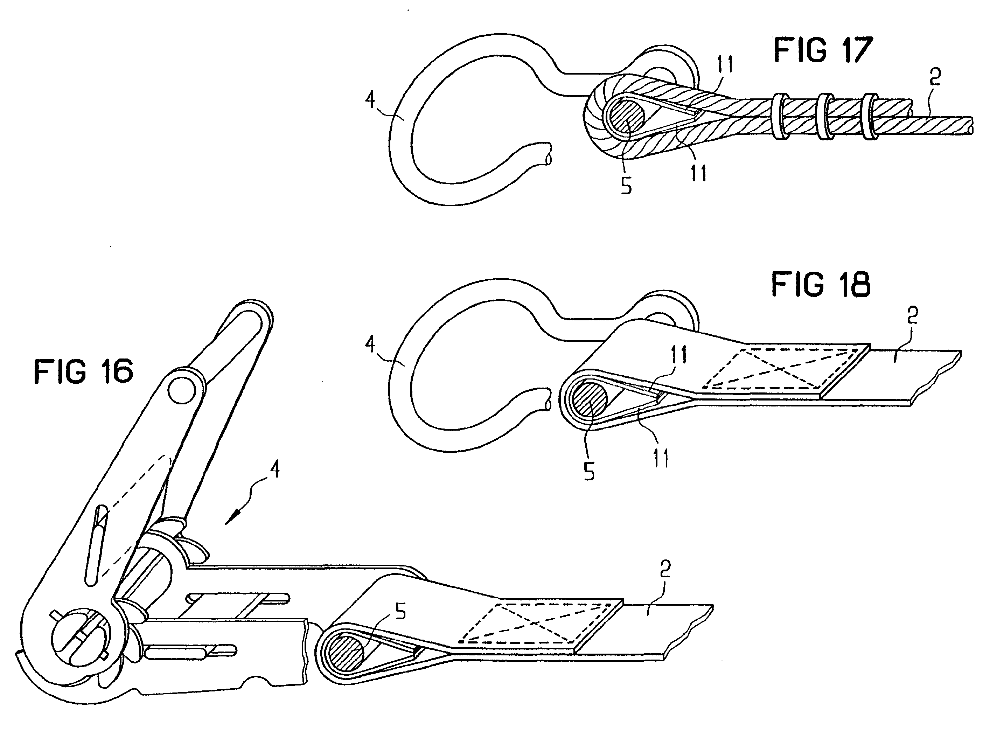

- Fig. 16: eine angeschlagene Spannratsche als Trägerin des Adaptionsteiles,
- Fig. 17 u. 18: einen angeschlagenen Schäkel als Träger des Adaptionsteils.

Der Belastungsanzeiger 1 dient zur Anzeige von Zugspannungen an Zugmitteln, die nachstehend kurz "Band" 2 genannt sind, aber ganz allgemein unterschiedliche Arten von Zugmitteln wie Zurrbänder oder Zurrseile, Hebebänder od.dgl. kennzeichnen. Das Band 2 ist jeweils an einem Ende mit einer Schlaufe oder Öse 3 zum Anschlagen oder Anhängen eines Adaptionsteiles 4 versehen, welches in der Regel durch einen Bolzen 5 von bevorzugt kreisartiger Querschnittsform gebildet ist und in Anschlagstellung durch die Bandöse 3 hindurchreicht. Anstelle eines Bolzens 5 kann auch ein Bügel oder ein stiftartiges Verbindungsteil mit von einer Kreisform abweichendem Querschnitt eingesetzt sein.

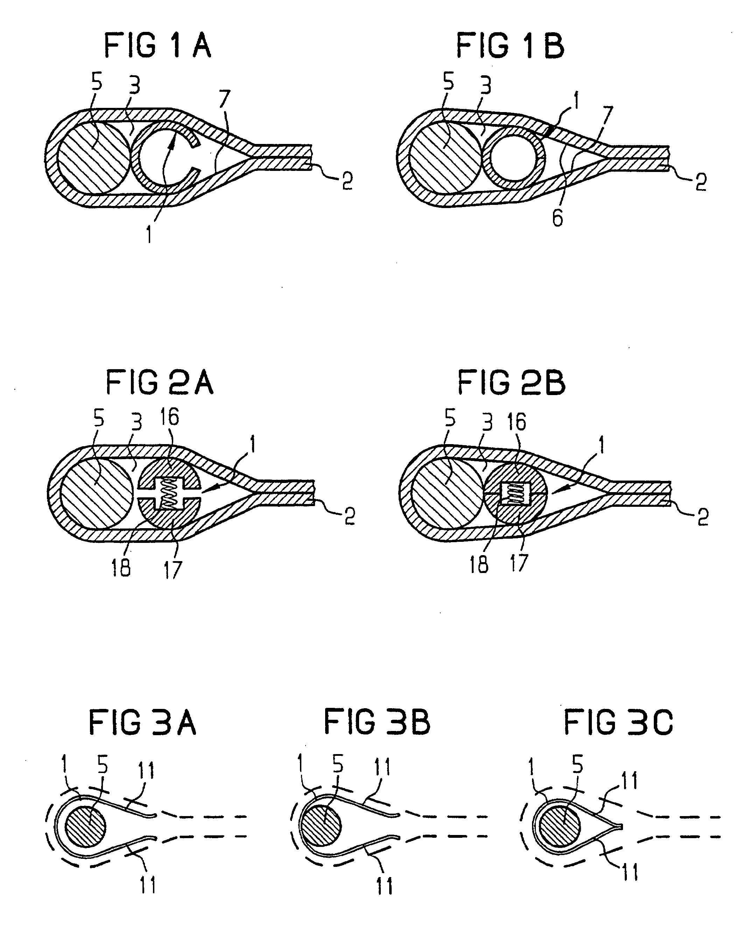

Grundsätzlich ist der Belastungsanzeiger bzw. Anzeigekörper 1 neben dem Bolzen 5 in der Bandöse 3 angeordnet. Die Anordnung erfolgt auf der Seite der Spitze der Tropfenform der Bandöse 3, womit der Belastungsanzeiger 1 nicht von der Zuglast unmittelbar beaufschlagt wird. Der Bolzen 5 hingegen liegt in der der Rundung der Tropfenform entsprechenden Umschlingung an der Bandöse an. Das ist auch bei einer Nebeneinander-Positionierung von Anzeigekörper 1 und Bolzen 5 entsprechend den Fig. 1 und 2 der Fall. Im Falle von Fig. 1 ist der Anzeigekörper ein einstückiges Formteil aus federndem Werkstoff in der Ausgestaltung als im Querschnitt C-förmiges Ringsegment mit der Zugmittelseite, also der Spitze der Tropfenform zugewandter C-Öffnung. Im Falle von Fig. 2 ist der Anzeigekörper mehrteilig ausgebildet. Er besteht hier aus zwei an den Innenflanken 6,7 der Bandöse 3 anliegenden Endstücken 16,17 mit dazwischen einer Druckfeder 18 als elastisch-kompressibles Medium.

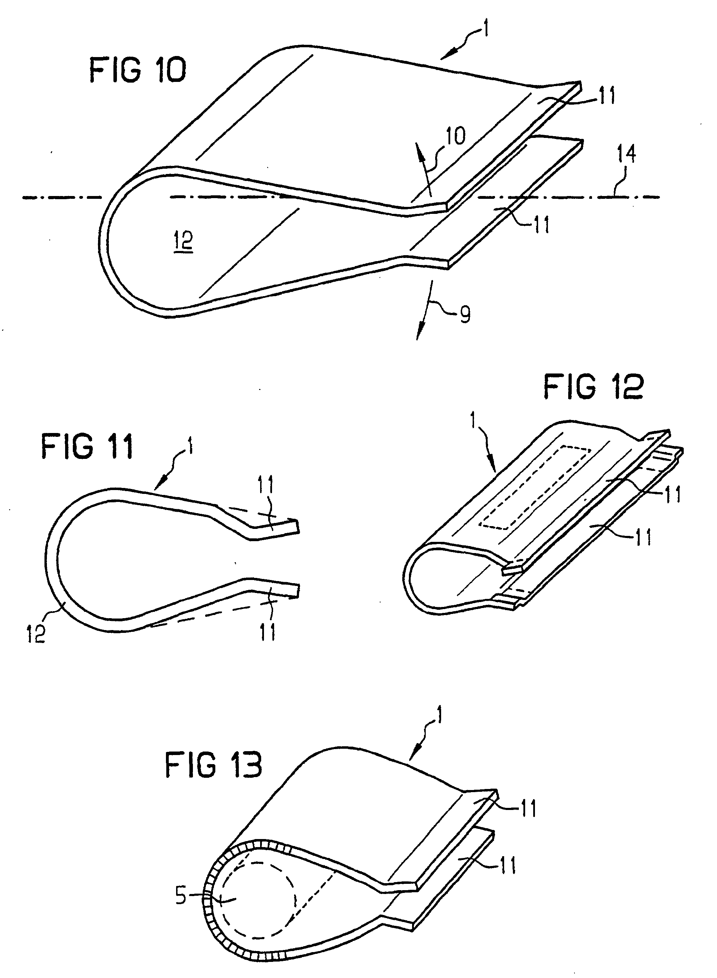

Die bevorzugte Ausführungsform des Anzeigekörpers 1 als einstückiges, in entlasteter Stellung C-förmiges Ringsegment enthält an ihren die C-Öffnung begrenzenden Enden zur Zugmittelseite hin abstehende Schenkel bzw. Schenkelenden 11. Die Schenkelenden 11 sind bei der Ausführungsform nach Fig. 8-14 in voneinander wegweisender Spreizrichtung 9,10 abgebogen oder abgewinkelt. Sie liegen durch die von ihnen unter Nullast ausgeübte Spreizwirkung haftschlüssig in der Bandöse ein und beaufschlagen dabei die Innenflanken 6,7 der Schlaufe oder Öse 3.

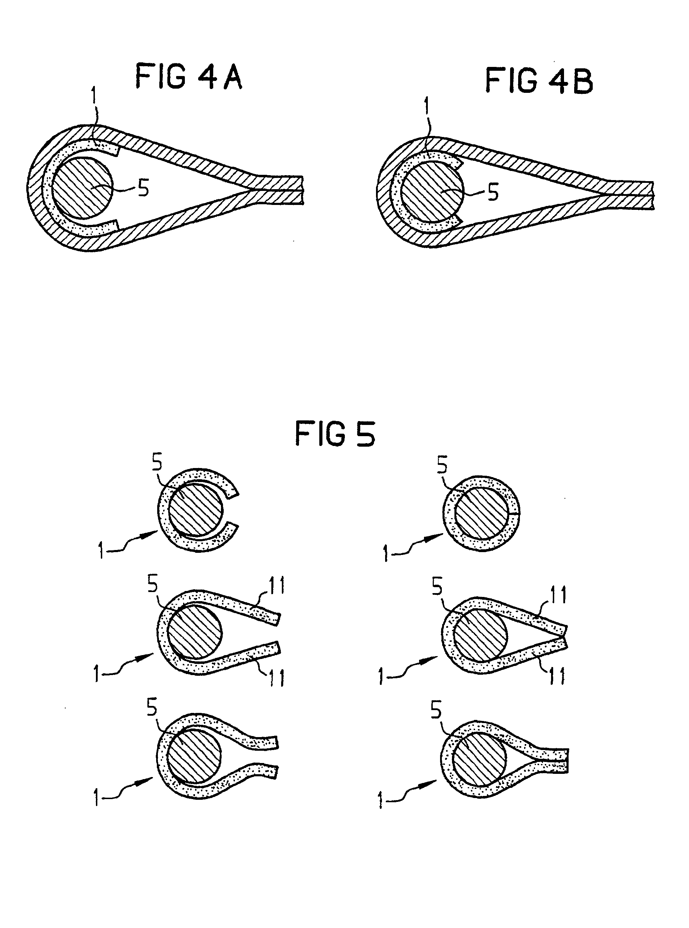

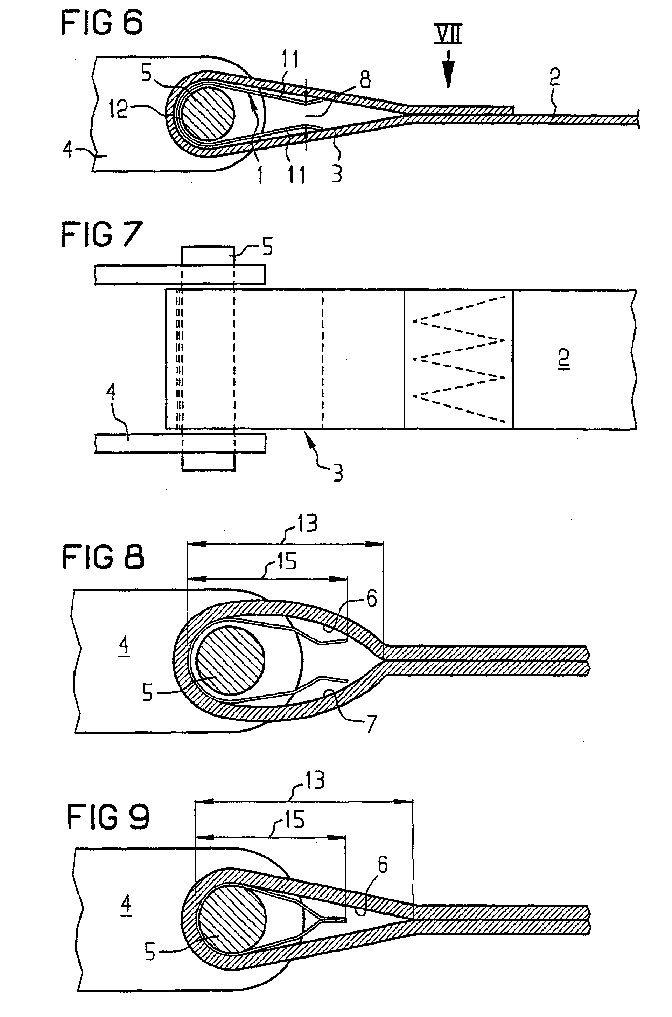

Wegen seiner gedrängten Bauweise ist die Kombination eines Bolzen 5 als Anschlagteil 4 mit dem einstückigen Anzeigekörper 1 in der in den Fig. 4-9 und 13 dargestellten Form des Zusammenwirkens von besonderem Vorteil. Hier liegt nämlich der Bolzen 5 nach Art einer Achse in dem ringsegmentartigen, in unbelastetem Zustand C-förmigen Anzeigekörper 1 ein und beaufschlagt unter Zugbelastung die Konkavseite des Anzeigekörpers 1. Dadurch kann die Bandöse 3 eine übliche Größe aufweisen, ohne daß dadurch die Anzeigedeutlichkeit beeinträchtigt wird.

Der Anzeigekörper 1 weist im wesentlichen auch eine dem griechischen Großbuchstaben Ω angenäherte Querschnittsform auf. Er ist aus einem metallischen Federblech gebogen, kann aber auch aus einem Kunststoff durch Spritzgießen hergestellt sein. Die Einfachheit seiner Herstellung resultiert aus einer etwa rechteckigen Querschnittsform auch seines Ringbogenhauptes 12 und seiner Schenkel. Die Querschnittsform kann aber auch nach Art einer Kausche ausgemuldet sein. Das könnte einen Formschluß mit der Bandöse 3 bilden.

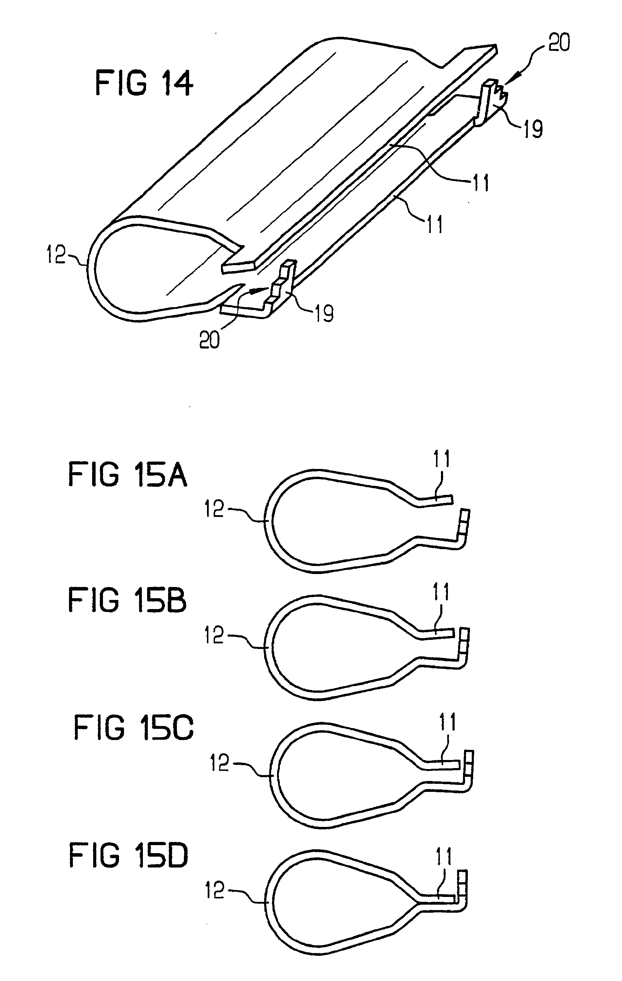

Der Anzeigekörper gemäß Fig. 14 enthält an seinem unteren Schenkelende 11 in Richtung auf den oberen Schenkel abstehende und in Entlastungsstellung (Fig. 15a) bis etwa in eine Überdeckungsstellung mit dem oberen Schenkelende reichende Sichtleisten 19. Es handelt sich dabei um einfache Abwinklungen des Anzeigekörpers 1. Die Sichtleisten 19 sind an ihren beiden in Einlagestellung von außen gut erkennbaren Seitenkanten mit einer nach Art einer Abtreppung ausgestalteten Maßeinteilung versehen. Die einzelnen Abstufungen dieser Abtreppung 20 sind der Belastungsindikator. Jede Stufe kennzeichnet in Überdeckung mit dem oberen Schenkelende 11 des Anzeigekörpers 1 eine unterschiedliche Belastung. Die Gefährlichkeit der unterschiedlichen Belastungsstufen kann auch durch eine unterschiedliche Farbgebung signalisiert sein.

Der Bolzen 5 zum Anschlagen oder Anhängen des mit dem Anzeigekörper 1 ausgestatteten Bandes 2 weist eine Querschnittsstärke auf, die kleiner ist als der Innendurchmesser des ringbogensegmentähnlichen Hauptes 12 des Anzeigekörpers 1, so daß im Falle einer bis in den Gefahrenbereich hin erfolgenden Überbelastung eine Durchmesserkontraktion gegenüber dem Bolzen 5 möglich ist, bei welcher sich zwangsläufig die Schenkelenden 11 einander annähern bzw. in eine Anlage aneinander geraten (Fig. 9,15). Gerade diese Anlage zeigt eine Gefahrensituation an. Diese Kompression des Wirkdurchmessers des Ringbogenhauptes läßt sich durch entsprechende Dimensionierung der Federklammer an bestimmte Belastungsgrößen anpassen. Auf diese Weise ist das Abstandsmaß 8 ein leicht erkennbarer optischer Anzeiger für den Belastungszustand des Bandes 2 bzw. der Schlaufe 3, d.h. für das eventuelle Vorliegen einer Gefahrensituation.

Ist der Belastungsanzeiger noch nicht belastet, so nehmen die Schenkel eine Spreizstellung (Fig. 8) ein, in welcher sie mit ihren Schenkelenden 11 an der Bandöse 3 von innen anliegen und diese leicht auseinanderspreizen. Bei Belastung drückt die Bandöse 3 in Radialrichtung auf das Haupt 12 des Ringbogens. Dabei stützt sich der als Klammer ausgebildete Anzeigekörper 1 am Bolzen 5 ab und beansprucht das Haupt 12 des Ringbogens auf Biegung. Die Klammer 1 reagiert auf die Belastung wie eine flächenbelastete Biegefeder. Die Verformung des Hauptes 12 des Ringbogens bewirkt eine Lageänderung der Schenkelenden 11, die sich einander annähern und bei gefährlicher Belastung sogar möglicherweise berühren können.

### Bezugszeichenliste

- 1: Anzeigekörper
- 2: Band
- 3: Bandöse
- 4: Adaptionsteil
- 5: Bolzen
- 6: Innenflanke
- 7: Innenflanke
- 8: Abstandsmaß
- 9: Spreizrichtung
- 10: Spreizrichtung
- 11: Schenkelende
- 12: Ringbogenhaupt
- 13: Bandösenlänge
- 14: Mittellängsachse
- 15: Länge
- 16: Endstück
- 17: Endstück
- 18: Druckfeder
- 19: Sichtleiste
- 20: Abtreppung

## Patentansprüche

1. Belastungsanzeiger zur Anzeige von Zugspannungen an Zugmitteln (2),
- die mit einer im Querschnitt die Umrißform etwa eines Tropfens bildenden Schlaufe oder Öse (3) zum Eingriff einer Gegenhaltekraft versehen sind,
- bei denen die Belastungsanzeige auf der dem Eingriffsbereich der Gegenhaltekraft abgewandten und der Spitze der Tropfenform zugewandten Zugmittelseite innerhalb der Schlaufe oder Öse (3) erfolgt,
- bei denen zu diesem Zweck der Belastungsanzeiger nach Art etwa der Schenkel einer Kausche an den einander gegenüberliegenden und in Richtung auf die Spitze der Tropfenform konvergierenden Innenflanken (6,7) der Schlaufe oder Öse (3) anliegt und einen etwa quer zu den Innenflanken (6,7) elastisch kompressiblen Anzeigekörper (1) enthält und
- bei denen der Zwischenabstand (8) zwischen den Anlagebereichen (11,16,17) des Belastungsanzeigers als sich mit zunehmender Zugspannung verringernder und mit abnehmender Zugspannung vergrößernder Belastungsindikator wirksam ist,
**dadurch gekennzeichnet,**
**daß** der Anzeigekörper die Innenflanken (6,7) der Schlaufe oder Öse (3) permanent derart elastisch druckbeaufschlagt, daß er sie unter Nullspannung am Zugmittel leicht auseinanderspreizt

2. Belastungsanzeiger nach Anspruch 1,
**dadurch gekennzeichnet,**
**daß** der Anzeigekörper (1) ein einstückiges Formteil aus federndem Werkstoff ist, welches mit seinen etwa in auf die Spitze der Tropfenform weisender Richtung des Zugmittelverlaufes ausgerichteten Enden an den Innenflanken der Schlaufe oder Öse (3) derart anliegt, daß die Öse unter Nullspannung am Zugmittel geringfügig aufgeweitet wird.

3. Belastungsanzeiger nach Anspruch 1 oder 2,
**dadurch gekennzeichnet,**
**daß** der Anzeigekörper (1) die Form etwa eines Ringsegments oder eines C mit dem Zugmittelangriff zugewandter Öffnung aufweist.

4. Belastungsanzeiger nach Anspruch 3,
**dadurch gekennzeichnet,**
**daß** die die Ringsegment- oder C-Öffnung begrenzenden Enden des Anzeigekörpers (1) zur Zugmittelseite hin abstehende Schenkel bzw. Schenkelenden (11) aufweisen.

5. Belastungsanzeiger nach einem oder mehreren der vorhergehenden Ansprüche,
**dadurch gekennzeichnet,**
**daß** die Schenkelenden (11) in voneinander wegweisender Spreizrichtung (9,10) abgebogen oder abgewinkelt sind.

6. Belastungsanzeiger nach Anspruch 4 oder 5,
**gekennzeichnet durch**
mindestens eine an einem Schenkel oder Schenkelende (11) angeordnete, in Richtung auf den anderen Schenkel abstehende und in Entlastungsstellung bis etwa in eine Überdeckungsstellung mit diesem reichende Sichtleiste (19).

7. Belastungsanzeiger nach Anspruch 6,
**dadurch gekennzeichnet,**
**daß** die Sichtleiste (19) mit einer Maßeinteilung versehen ist.

8. Belastungsanzeiger nach Anspruch 6 oder 7,
**gekennzeichnet durch**
mindestens eine Abstufung einer Kante der Sichtleiste (19) als Belastungsindikator.

9. Belastungsanzeiger nach einem oder mehreren der vorhergehenden Ansprüche,
**dadurch gekennzeichnet,**
**daß** der Bolzen (5) eines die Gegenhaltekraft zum Zugmittel einleitenden Adaptionsteils (4) nach Art einer Achse im ringsegmentartigen oder C-förmigen Anzeigekörper (1) einliegt.

10. Belastungsanzeiger nach einem oder mehreren der vorhergehenden Ansprüche,
**dadurch gekennzeichnet,**
**daß** der einstückige Anzeigekörper (1) annähernd die Form des griechischen Großbuchstaben Ω aufweist.

11. Belastungsanzeiger nach einem oder mehreren der vorhergehenden Ansprüche,
**dadurch gekennzeichnet,**
**daß** der Anzeigekörper (1) aus einem metallischen Federblech gebogen oder aus Kunststoff durch Spritzgießen hergestellt ist.

12. Belastungsanzeiger nach einem oder mehreren der vorhergehenden Ansprüche,
**gekennzeichnet durch**
eine etwa rechteckige Querschnittsform seines Ringbogenhauptes (12) und/oder seiner Schenkel und/oder Schenkelenden (11).

13. Zum Anschlagen oder Anhängen eines mit einem Belastungsanzeiger (1) nach einem oder mehreren der vorhergehenden Ansprüche ausgestatteten Zugmittels bestimmtes Adaptionsteil (4) mit einem bolzenartigen Anschlagteil, dessen Querschnittsstärke oder Außendurchmesser kleiner ist als etwa der Innendurchmesser des ringbogensegmentförmigen oder C-ähnlichen Ringbogenhauptes (12) des Anzeigekörpers (1).

14. Adaptionsteil (4) nach Anspruch 13,
**dadurch gekennzeichnet,**
**daß** es eine Ratsche oder ein Schäkel ist.

15. Zugmittel mit einer Bandöse (3) und an deren Innenflanken (6,7) nach Art einer Kausche anliegendem Belastungsanzeiger (1) nach einem oder mehreren der vorhergehenden Ansprüche,
wobei die in Belastungsrichtung des Zugmittels (2) gemessene Bandösenlänge (13) größer ist als die in Richtung der Mittellängsachse (14) gemessene Länge (15) des Anzeigekörpers (1).

16. Zugmittel nach Anspruch 15,
**dadurch gekennzeichnet,**
**daß** die Länge des Anzeigekörpers (1) zwischen etwa 50 und 80 Prozent der lastfreien Bandösenlänge (13) beträgt.

## Claims

1. A load indicator for indicating tensile stresses on traction devices (2)
- which are provided with a loop or eyelet (3), forming in cross-section the approximate outline shape of a teardrop, for the introduction of a counterholding force,
- in which the load indication takes place within the loop or eyelet (3) on the traction device side directed away from the area of introduction of the counter-holding force and directed towards the tip of the teardrop shape,
- in which for this purpose the load indicator rests approximately in the manner of the legs of a cable eye stiffener against the mutually opposite inside flanks (6,7) of the loop or eyelet (3) converging towards the tip of the teardrop shape, and includes an indicator body (1) which is elastically compressible approximately transversely to the inside flanks (6, 7) and
- in which the distance (8) between the contact regions (11, 15,17) of the load indicator acts as a load indicating device which decreases with increasing tensile stress and increases with decreasing tensile stress,
**characterised in that** the indicator body exerts a permanent elastic pressure on the inside flanks (6, 7) of the loop or eyelet (3) in such a way that it spreads them slightly when the traction device is under zero stress.

2. A load indicator according to claim 1,
**characterised in that** the indicator body (1) is a one-piece moulded part composed of a resilient material, the ends of which, oriented approximately in the direction in which the traction device extends towards the tip of the teardrop-shape, rest against the inside flanks of the loop or eyelet (3) such that the eyelet is widened slightly when the traction device is under zero stress.

3. A load indicator according to claim 1 or 2,
**characterised in that** the indicator body (1) is shaped approximately like a ring segment or a C with an opening directed towards the attachment of the traction device.

4. A load indicator according to claim 3,
**characterised in that** the ends of the indicator body (1) limiting the ring-segment opening or the C opening have legs or leg ends (11) projecting towards the side of the traction device.

5. A load indicator according to one or more of the preceding claims,
**characterised in that** the leg ends (11) are bent or angled in spreading directions (9, 10) directed away from one another.

6. A load indicator according to claim 4 or 5,
**characterised by** at least one viewing strip (19) disposed on a leg or leg end (11) and projecting towards the other leg and, in the no-load position, extending to an approximately overlapping position with the said other leg.

7. A load indicator according to claim 6,
**characterised in that** the viewing strip (19) is provided with a graduation.

8. A load indicator according to claim 6 or 7,
**characterised by** at least one step of an edge of the viewing strip (19) as a load indicator.

9. A load indicator according to one or more of the preceding claims,
**characterised in that** the pin (5) of an adaptation part (4) which introduces the counterholding force to the traction device lies in a ring-segment-like or C-shaped indicator body (1) in the manner of a shaft.

10. A load indicator according to one or more of the preceding claims,
**characterised in that** the one-piece indicator body (1) has approximately the shape of the Greek capital letter.

11. A load indicator according to one or more of the preceding claims,
**characterised in that** the indicator body (1) is bent from a metallic spring-steel sheet or is made from plastics material by means of injection moulding.

12. A load indicator according to one or more of the preceding claims,
**characterised by** an approximately rectangular cross-section shape of its ring-curve head (12) and/or its legs and/or log ends (11).

13. An adaptation part (4) intended for attaching or suspending a traction device equipped with a load indicator (1) according to one or more of the preceding claims, comprising a pin-like attachment part, the cross-section thickness or outside diameter of which is smaller than the approximate inside diameter of the ring-curve head (12) of the indicator body (1) shaped like a ring-curve segment or a C.

14. A adaptation part (4) according to claim 13,
**characterised in that** it is a ratchet or a shackle.

15. A traction device comprising a belt eyelet (3) and a load indicator (1) which rests against its inside flanks (6, 7) in the manner of a cable eye stiffener, according to one or more of the preceding claims,
wherein the belt-eyelet length (13), measured in the load direction of the traction device (2), is greater than the length (15) of the indicator body (1), measured in the direction of the centre longitudinal axis (14).

16. A traction device according to claim 15,
**characterised in that** the length of the indicator body (1) is between about 50 and 80 percent of the non-loaded belt-eyelet length (13).

## Revendications

1. Indicateur de charge pour indiquer des contraintes de traction sur des éléments de traction (2),
- qui sont pourvus d'une boucle ou d'un oeillet (3) de section à contour approximativement en forme de goutte pour l'attaque d'une force de maintien antagoniste,
- dans lesquels l'affichage de la charge s'effectue sur le côté de l'élément de traction qui est détourné de la zone d'attaque de la force de maintien antagoniste et tourné vers la pointe de la forme en goutte, à l'intérieur de la boucle ou de l'oeillet (3),
- dans lesquels l'indicateur de charge prend appui à cet effet à la manière des branches d'une cosse contre les flancs intérieurs (6, 7) de la boucle ou de l'oeillet (3) opposés l'un à l'autre et convergeant en direction de la pointe de la forme en goutte, et comprend un corps d'affichage (1) élastiquement compressible perpendiculairement aux flancs intérieurs (6, 7), et
- dans lesquels la distance intermédiaire (8) entre les zones d'appui (11, 16, 17) de l'indicateur de charge fait office d'indicateur de charge qui se réduit au fur et à mesure de l'augmentation de la contrainte de traction et qui s'agrandit au fur et à mesure de la réduction de la contrainte de traction,
**caractérisé en ce que**
le corps d'affichage sollicite en pression élastiquement et en permanence les flancs intérieurs (6, 7) de la boucle ou de l'oeillet (3), de manière à les écarter légèrement lorsque la contrainte au niveau de l'élément de traction est nulle.

2. Indicateur de charge selon la revendication 1, **caractérisé en ce que** le corps d'affichage (1) est une pièce conformée d'un seul tenant en matière élastique, qui prend appui par ses extrémités, orientées en direction de l'extension de l'élément de traction dirigée approximativement vers la pointe de la forme en goutte, contre les flancs intérieurs de la boucle ou de l'oeillet (3), de telle sorte que l'oeillet est légèrement évasé lorsque la contrainte au niveau de l'élément de traction est nulle.

3. Indicateur de charge selon l'une ou l'autre des revendications 1 et 2,
**caractérisé en ce que** le corps d'affichage (1) présente par exemple la forme d'un segment de bague ou d'un C, l'ouverture étant orientée vers le point d'attaque de l'élément de traction.

4. Indicateur de charge selon la revendication 3, **caractérisé en ce que** les extrémités du corps d'affichage (1), limitant l'ouverture du segment de bague ou de la forme en C, comprennent des branches ou extrémités de branche (11) faisant saillie vers le côté de l'élément de traction.

5. Indicateur de charge selon l'une ou plusieurs des revendications précédentes, **caractérisé en ce que** les extrémités de branche (11) sont cintrées ou coudées dans une direction d'écartement (9, 10) en éloignement l'une de l'autre.

6. Indicateur de charge selon l'une ou l'autre des revendications 4 et 5,
**caractérisé par** au moins une baguette visible (19) agencée sur une branche ou extrémité de branche (11), faisant saillie en direction de l'autre branche et s'étendant, en position de décharge, approximativement jusqu'à une position de superposition avec celle-ci.

7. Indicateur de charge selon la revendication 6, **caractérisé en ce que** la baguette visible (19) est pourvue d'une graduation.

8. Indicateur de charge selon l'une ou l'autre des revendications 6 et 7,
**caractérisé par** au moins un gradin sur une arête de la baguette visible (19) à titre d'indicateur de charge.

9. Indicateur de charge selon l'une ou plusieurs des revendications précédentes, **caractérisé en ce que** le goujon (5) d'une pièce d'adaptation (4) appliquant la force de maintien antagoniste vers l'élément de traction repose à la manière d'un axe dans le corps d'affichage (1) en forme de segment de bague ou en forme de C.

10. Indicateur de charge selon l'une ou plusieurs des revendications précédentes, **caractérisé en ce que** le corps d'affichage (1) d'un seul tenant présente approximativement la forme de la lettre grecque Ω.

11. Indicateur de charge selon l'une ou plusieurs des revendications précédentes, **caractérisé en ce que** le corps d'affichage (1) est cintré à partir d'une tôle en métal ressort ou est réalisé en matière plastique par coulée-injection.

12. Indicateur de charge selon l'une ou plusieurs des revendications précédentes, **caractérisé par** une section de forme approximativement rectangulaire de sa tête d'arc de cercle (12) et/ou de ses branches et/ou extrémités de branche (11).

13. Pièce d'adaptation (4) destinée à accrocher ou attacher un élément de traction équipé d'un indicateur de charge (1) selon l'une ou plusieurs des revendications précédentes, comportant une partie de montage en forme de goujon dont l'épaisseur de section ou le diamètre extérieur est inférieur(e) au diamètre intérieur de la tête d'arc de cercle (12) en forme de segment d'arc de cercle ou en forme de C du corps d'affichage (1).

14. Pièce d'adaptation (4) selon la revendication 13, **caractérisée en ce qu'**elle est un cliquet ou une manille.

15. Elément de traction comportant un oeillet de bande (3) et un indicateur de charge (1), en appui contre ses flancs intérieurs (6, 7) à la manière d'une cosse, selon l'une ou plusieurs des revendications précédentes, dans lequel la longueur (13) de l'oeillet de bande mesurée en direction de charge de l'élément de traction (2) est supérieure à la longueur (15) du corps d'affichage (1) mesurée en direction de l'axe longitudinal central (14).

16. Elément de traction selon la revendication 15, **caractérisé en ce que** la longueur du corps d'affichage (1) est comprise entre environ 50 et 80 % de la longueur (13) de l'oeillet de bande non chargé.
